# EUROPÄISCHE PATENTANMELDUNG

(11) **EP 1 617 397 A2**
(43) Veröffentlichungstag der Anmeldung: **18.01.2006**
(21) Anmeldenummer: 05014352.8
(22) Anmeldetag: 01.07.2005
(51) Int. Cl.: G09G 3/00

(54) **Beschriftungs- und Anzeigeeinrichtung für elektrische Geräte**

(30) Priorität: 16.07.2004 DE 102004034438
(71) Anmelder: ABB PATENT GmbH, 68526 Ladenburg (DE)
(72) Erfinder: Garrels, Kai, Dipl.-Ing., 68239 Mannheim (DE)
(74) Vertreter: Miller, Toivo

(57) **Zusammenfassung**

Die Erfindung bezieht sich auf eine Beschriftungs- und Anzeigeeinrichtung (30) zur Anzeige von geräte- und/oder prozessspezifischen Informationen und/oder Kanalinformationen und/oder Diagnoseinformationen (31), (32) für ein elektrisches Gerät und/oder eine elektrische Komponente (10) in Steuerungssystemen, insbesondere aus dem Bereich der Installation von Steuerungsgeräten und/oder -komponenten in Gebäuden oder Industrieanlagen, welche eine Materialschicht umfassen, in der gefärbte Teilchen mittels elektrischer Felder derart beeinflussbar sind, dass durch die Materialschicht (30) Geräte-, Prozess-, Kanal- und/oder Diagnoseinformationen (31), (32) darstellbar sind, und die Materialschicht mittels wenigstens einer elektrischen Verbindung an das elektrische Gerät oder die elektrischen Komponente (10) anschließbar ist, so dass geräte- und/oder prozessspezifischen Informationen und/oder Kanalinformationen und/oder Diagnoseinformationen (31), (32) vom elektrischen Gerät und/oder der elektrische Komponente (10) auf die Materialschicht der Beschriftungs- und Anzeigeeinrichtung (30) übertragbar und/oder aktivierbar sind.

## Beschreibung

Die Erfindung betrifft eine Beschriftungs- und Anzeigeeinrichtung zur Anzeige von geräte- und/oder prozessspezifischen Informationen und/oder Kanalinformationen und/oder Diagnoseinformationen für elektrische Geräte und/oder elektrische Komponenten in Steuerungssystemen, welche insbesondere im Bereich der Installation von Steuerungsgeräten und/oder -komponenten in Gebäuden oder Industrieanlagen eingesetzt werden.

Die bei der Installation von Steuerungstechnik in Gebäuden oder in Industrieanlagen eingesetzten Geräte oder Komponenten, wie beispielsweise speicherprogrammierbare Steuerungen, Ein-/Ausgabegeräte oder Feldgeräte, zu denen unter anderen Motorschutzeinheiten oder Motorsteuereinheiten zählen, weisen üblicherweise unterschiedliche Beschriftungsfelder zur Beschriftung der Typbezeichnung oder Bestellbezeichnung des Gerätes auf. Die Beschriftungsfelder werden üblicherweise durch Tampondruck oder Laserbeschriftung durch den Gerätehersteller aufgebracht.

Beschriftungen für die Verwendung des Gerätes, beispielsweise Anlagenkennzeichnungen oder Ortsangaben, sind vorzugsweise durch aufschnappbare Beschriftungsträger vom Kunden aufwendig manuell auf das Gerät aufzubringen und zu beschriften.

Insbesondere Ein-/Ausgabemodule benötigen eine zusätzliche Beschriftung der einzelnen Kanäle, die meist in Zusammenhang mit einer Anzeige der Signalzustände mittels einer LED (lichtemittierende Diode) für den jeweiligen Kanal steht und durch zusätzliche Beschriftungsträger oder einlegbare Papierstreifen realisiert wird. Die Verwendung der LED's zur Anzeige der Signalzuständen ist mit einem nicht vernachlässigbaren Energiebedarf verbunden und verursacht dadurch erhebliche Kosten.

Für die Anzeige von Prozess- und Diagnoseinformationen ist eine Vielzahl elektrischer Geräte und/oder Komponenten mit LCD (Liquid Cystal Displays)-Displays ausgestattet, welche jedoch eine kontinuierliche Energieversorgung benötigen und insbesondere mittels LCD-Displays angezeigte Fehlermeldungen bei einem Ausfall der Spannungsversorgung am Gerät nicht mehr ablesbar sind. Auch wirken sich Reflexionen des Umgebungslichtes, Kontrast und mögliche Betrachtungswinkel negativ auf die Ablesbarkeit der LCD-Anzeigen aus.

Ausgehend von den beschriebenen Nachteilen liegt der Erfindung die Aufgabe zugrunde, eine neue Beschriftungs- und Anzeigeeinrichtung zur Anzeige von geräte- und/oder prozessspezifischen Informationen und/oder Kanalinformationen und/oder Diagnosefunktionen für elektrische Geräte und/oder elektrische Komponenten in Steuerungssystemen anzugeben, welche insbesondere im Bereich der Installation von Steuerungsgeräten und/oder -komponenten in Gebäuden oder Industrieanlagen eingesetzt werden, und wodurch vorgenannte Nachteile des Standes der Technik überwunden werden.

Diese Aufgabe wird erfindungsgemäß durch eine Beschriftungs- und Anzeigeeinrichtung der eingangs genannten Art mit den im Anspruch 1 angegebenen Merkmalen gelöst. Vorteilhafte Ausgestaltungen, Verbesserungen der erfindungsgemäßen Einrichtung sind in weiteren Ansprüchen und in der Beschreibung angegeben.

Die erfindungsgemäße Beschriftungs- und Anzeigeeinrichtung für elektrische Geräte und Komponenten, umfasst eine Materialschicht, welche als dünne Folie ausgeführt ist, und in der gefärbte Teilchen mittels elektrischer Felder so ausgerichtet werden, dass durch die Materialschicht Geräte-, Kanal-, Prozess- und/oder Diagnoseinformationen darstellbar sind.

In www.heise.de/newsticker/meldung/44006 ist ein "elektronisches Papier" beschrieben, in dessen Materialschicht sich so genannte elektronische Tinte befindet. Die elektronische Tinte besteht aus winzig kleinen, mit schwarzen oder weißem Pigment gefüllten Mikrokapseln. Werden die Kapseln mit Strom versorgt, so treiben sie dank ihrer elektrischen Ladung an eine Seite der Oberfläche der Materialschicht und verdrängen dort die eingefärbte Flüssigkeit. Mit gezielten Signalen sind die schwarzen und weißen Kügelchen genau steuerbar, so dass sich an der Oberfläche der Materialschicht ein bestimmtes Bild ergibt oder ein bestimmter Text erscheint.

Ein anderes Prinzip des "elektronischen Papiers" ist in www.giev.de/informatik/lexikon/inf-lex-eletronisches-papier.shtml beschrieben. In der Materialschicht befinden sind zweifarbige Kügelchen, die einen elektrischen Dipol aufweisen. Die Kügelchen werden in einer dünnen, transparenten und flexiblen Kunststofffolie in Aushöhlungen gelagert, wo sie sich in einer Flüssigkeit drehen können und über Elektroden die farbige Ausrichtung der Partikel erzielt wird.

Erfindungsgemäß lassen sich sämtliche die geräte- und .prozessspezifischen Informationen betreffenden Beschriftungsaufgaben durch die auf dem Geräte aufgebrachte Beschriftungs- und Anzeigeeinrichtung, im folgenden auch als Beschriftungsfolie bezeichnet, ausführen, wobei die elektronische Beschriftungsfolie mittels wenigstens einer elektrischen Verbindung an das elektrische Gerät oder die elektrischen Komponente anschließbar ist und somit die in der Materialschicht befindlichen gefärbten Teilchen mit elektrischer Energie versorgt werden.

Die in den gerätespezifischen Beschriftungselementen bereits enthaltenen Informationen, wie Typebezeichnung und Geräteparameter, sind in vorteilhafter Weise schon bei der Herstellung des Gerätes aktivierbar und bleiben, wie auch die kanalspezifischen Informationen, bei einem Spannungsausfall des Gerätes erhalten.

Weiterhin ist in vorteilhafter Weise vorgesehen, dass insbesondere die Kanalinformationen und Gerätebeschriftung änderbar sind.

In einer vorteilhaften Ausgestaltung der Erfindung ist bei der Installation des Gerätes durch den Kunden eine Aktivierung der Geräte- und Kanalinformationen mittels der Verbindung der Beschriftungsfolie zu einem Programmier- oder Konfigurationswerkzeug vorgesehen, so dass Geräte- und Kanalinformationen direkt aus dem Programmier- oder Konfigurationswerkzeug auf die Beschriftungs- und Anzeigeeinrichtung aufbringbar sind und eine aufwendige manuelle Beschriftung des Gerätes entfällt. Für die Übertragung und/oder Aktivierung der Geräte- und Kanalinformationen kann die Beschriftungs- und Anzeigeeinrichtung alternativ einen separater Programmiergeräteanschluss für das Programmier- oder Konfigurationswerkzeug aufweisen.

Auch ist vorgesehen, Prozesssignale sowie Signal- oder Diagnoseinformationen über die elektrische Verbindung zwischen dem elektrischen Gerät und der Anzeige- und Beschriftungseinrichtung oder alternativ über eine weitere elektrische Verbindung von einer externen Einheit zur Beschriftungs- und Anzeigeeinrichtung zu übertragen und dort anzuzeigen sowie die Informationen aus dem Prozess auf der Beschriftung dynamisch zu aktualisieren.

Dadurch, dass die angezeigten oder durch den Anwender ausgewählten Informationen, beispielsweise Prozess- und/oder Diagnoseinformationen, auch im spannungslosen Zustand des Gerätes, insbesondere bei einem Ausfall des Gerätes in vorteilhafter Weise erhalten bleiben, wird die Fehlersuche erleichtert.

In einer weiteren vorteilhaften Ausgestaltung der Erfindung ist auf die Beschriftungsfolie ein kundenspezifisches Bedienelement aufbringbar, womit eine Visualisierung und Bedienung des Gerätes oder des Prozesses ausführbar ist.

Weitere Anwendungsgebiete erschließen sich, wenn die Beschriftungsfolie zur Anzeige eines Barcodes ausgeführt ist, welcher mittels Softwareupdates modifizierbar ist.

Auch zeichnet sich die erfindungsgemäße Beschriftungs- und Anzeigeeinrichtung gegenüber herkömmlichen Anzeige- und Beschriftungsfeldern auf den elektrischen Geräten und/oder Komponenten durch eine bessere Ablesbarkeit und eine höhere Auflösung der dargestellten Informationen aus.

Da die erfindungsgemäße Beschriftungs- und Anzeigeeinrichtung nur beim Umschalten elektrische Energie verbraucht und eine Verwendung von LED's zur Anzeige von Signalzuständen entfällt, ist nur ein geringer Energiebedarf erforderlich. Der Zustand der dargestellten Informationen bleibt im Unterschied zur Anzeigeeinrichtungen mittels LCD-Displays oder LED's bei Ausfall der Spannungsversorgung am Gerät erhalten. Informationen, die bei ausgeschaltetem Gerät nicht erhalten bleiben sollen, können beispielsweise in der "Power Down"- Funktion (Leistungsabsenkungsfunktion zur Energieeinsparung) des Gerätes aktiv gelöscht werden.

Weitere Vorteile gegenüber herkömmlichen Beschriftungs- und Anzeigeinrichtungen, welche mittels LCD (Liquid Cystal Displays)- Displays ausgeführt sind, bestehen zum einen in niedrigeren Herstellungskosten und einem geringeren Gewicht der Beschriftungsfolie. Zum anderen sind Geräte mit der erfindungsgemäßen Beschriftungsfolie besser ablesbar, da sich Reflexion, Kontrast und mögliche Betrachtungswinkel verbessern bzw. vergrößern.

Anhand des in der folgenden Figur dargestellten Ausführungsbeispieles sollen die Erfindung sowie vorteilhafte Ausgestaltungen, Verbesserungen und weitere Vorteile der Erfindung näher erläutert und beschrieben werden.

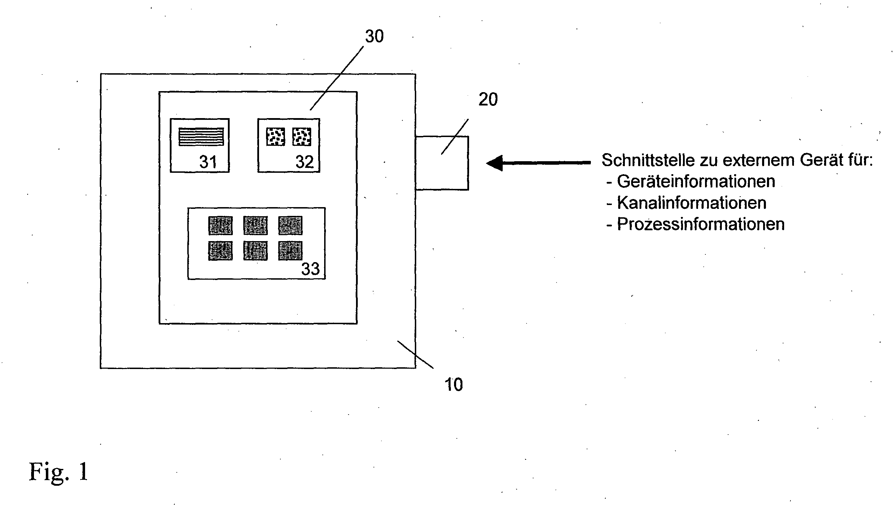

Es zeigt Fig. 1 eine Ausführungsform einer als "elektronisches Papier" ausgeführten und auf der Frontseite eines elektrischen Gerätes 10 aufgebrachten Beschriftungs - und Anzeigeeinrichtung 30 zur Anzeige von geräte- und/oder prozessspezifischen Informationen und/oder Diagnoseinformationen und/oder Kanalinformationen 31, 32, wie beispielsweise Benutzereingaben, Herstellerinformationen, Betriebszustände, Geräte- und Kanalbezeichnungen, Typenbezeichnung und Geräteparameter.

In der Materialschicht des "elektronischen Papiers" 30 befinden sich gefärbte Teilchen, die mittels elektrischer Felder derart beeinflussbar sind, dass durch die Materialschicht die Geräte-, Kanal-, Prozess- und/oder Diagnoseinformationen 31, 32 darstellbar sind.

Das "elektronische Papier" 30 ist mittels einer nicht dargestellten elektrischen Verbindung an das elektrische Gerät oder die elektrischen Komponente 10 anschließbar, so dass gerätespezifischen Beschriftungselemente 31, wie Typebezeichnungen und Geräteparameter, vom elektrischen Gerät und/oder der elektrische Komponente 10 auf die Materialschicht der Beschriftungs- und Anzeigeeinrichtung 30 bei der Herstellung des Gerätes 10 auf das "elektronische Papier" übertragbar und aktivierbar sind.

Die geräte- und/oder prozessspezifischen Informationen und/oder Kanalinformationen und/oder Diagnoseinformationen 31, 32 sind über wenigstens eine Geräteschnittstelle 20 von einer externen Einheit, welche beispielsweise als Feldbusanschluss zum Prozess und/oder als Programmiergeräteanschluss für ein Programmier- und/oder Konfigurationswerkzeug ausgeführt ist, in das elektrische Gerät oder in die elektrische Komponente 10 übertragbar und mittels der Übertragung über die elektrische Verbindung zwischen dem elektrischen Gerät oder der elektrischen Komponente 10 und dem "elektronischen Papier" 30 auf der Materialschicht des "elektronischen Papiers" 30 darstellbar.

Alternativ kann eine weitere elektrische Verbindung für den Anschluss der Beschriftungs- und Anzeigeeinrichtung 30 an ein Programmier- oder Konfigurationswerkzeug zur Aktivierung der Geräte- und Kanalbezeichnungen 31, 32 auf der Beschriftungs- und Anzeigeeinrichtung 30 vorgesehen sein, so dass Geräte- und Kanalbezeichnungen 31, 32 direkt aus dem Programmier- oder Konfigurationswerkzeug auf die Beschriftungs- und Anzeigeeinrichtung 30 übertragbar sind.

Informationen über Prozesszustände, Prozessparameter und/oder Diagnosefunktionen als auch Visualisierungen der Prozessinformationen 32 sind dynamisch mittels der Geräteschnittstelle 20 oder der weiteren elektrischen Verbindung auf die Beschriftungs- und Anzeigeeinrichtung 30 übertragbar, so dass die Informationen aus dem Prozess auf der Beschriftungs- und Anzeigeeinrichtung 30 aktualisierbar sind.

Zusätzlich ist die erfindungsgemäße Beschriftungs- und Anzeigeeinrichtung 30 mit einem vorzugsweise als Touch Screen (Tast-Bildschirm) ausgeführtem kundenspezifischem Bedienelement 33 ausgestattet, welches zur Eingabe und/oder zur Anzeige der geräte-, und/oder prozessspezifischen Informationen, zur Darstellung von Fehlermeldungen und/oder zur der Bedienung des Gerätes ausgeführt ist.

## Patentansprüche

1. Beschriftungs- und Anzeigeeinrichtung (30) zur Anzeige von geräte- und/oder prozessspezifischen Informationen und/oder Kanalinformationen und/oder Diagnoseinformationen (31), (32) für ein elektrisches Gerät und/oder eine elektrische Komponente (10) in Steuerungssystemen, insbesondere aus dem Bereich der Installation von Steuerungsgeräten und/oder -komponenten in Gebäuden oder Industrieanlagen, welche
- eine Materialschicht umfassen, in der gefärbte Teilchen mittels elektrischer Felder derart beeinflussbar sind, dass durch die Materialschicht (30) Geräte-, Prozess-, Kanal- und/oder Diagnoseinformationen (31), (32) statisch und/oder dynamisch darstellbar sind, und
- die Materialschicht mittels wenigstens einer elektrischen Verbindung an das elektrische Gerät oder die elektrischen Komponente (10) anschließbar ist, so dass geräte- und/oder prozessspezifischen Informationen und/oder Kanalinformationen und/oder Diagnoseinformationen (31), (32) vom elektrischen Gerät und/oder der elektrische Komponente (10) auf die Materialschicht der Beschriftungs- und Anzeigeeinrichtung (30) übertragbar und/oder aktivierbar sind.

2. Beschriftungs- und Anzeigeeinrichtung (30) nach Anspruch 1, **dadurch gekennzeichnet, dass** die geräte- und/oder prozessspezifischen Informationen und /oder die Kanalinformationen und/oder die Diagnoseinformationen (31), (32) über wenigstens eine Geräteschnittstelle (20) in das elektrische Gerät und/oder in die elektrische Komponente (10) übertragbar sind.

3. Beschriftungs- und Anzeigeeinrichtung (30) nach Anspruch 1 oder 2, **dadurch gekennzeichnet, dass** die geräte- und/oder prozessspezifischen Informationen und/oder die Kanalinformationen und/oder die Diagnoseinformationen (31), (32) über wenigstens eine weitere elektrische Verbindung auf die Materialschicht der Beschriftungs- und Anzeigeeinrichtung (30) übertragbar und/oder aktivierbar sind.

4. Beschriftungs- und Anzeigeeinrichtung (30) nach Anspruch 3, **dadurch gekennzeichnet, dass** die Geräteschnittstelle (20) ein Feldbusanschluss zur Übertragung der Prozessinformationen und/oder ein Programmiergeräteanschluss zur Übertragung und/oder Aktivierung der Geräte- und/oder Kanalinformationen (31), (32) auf der Beschriftungs- und Anzeigeeinrichtung (30) ist.

5. Beschriftungs- und Anzeigeeinrichtung (30) nach einem der vorherigen Ansprüche, **dadurch gekennzeichnet, dass** die gerätespezifischen Informationen (31) vom Gerätehersteller aktivierbar sind.

6. Beschriftungs- und Anzeigeeinrichtung (30) nach einem der vorherigen Ansprüche, **dadurch gekennzeichnet, dass** die Materialschicht mit einem Bedienelement (33) zur Eingabe und/oder zur Anzeige der geräte-, und/oder prozessspezifischen Informationen und/oder zur Darstellung von Fehlermeldungen und/oder zur der Bedienung des Gerätes ausgeführt ist.

7. Beschriftungs- und Anzeigeeinrichtung (30), nach einem der vorherigen Ansprüche, **dadurch gekennzeichnet, dass** das Bedienelement (33) als Touch Screen zur Eingabe von Beschriftungs- und/oder Anzeigeinformationen und/oder Kanalinformationen sowie zur Bedienung des elektrischen Gerätes und/oder der elektrischen Komponente (10) ausgebildet ist.

8. Beschriftungs- und Anzeigeeinrichtung (30) nach einem der vorherigen Ansprüche, **dadurch gekennzeichnet, dass** die Prozessinformationen und/oder Diagnoseinformationen (32) dynamisch mit den Informationen aus dem Prozess auf der Beschriftungs- und Anzeigeeinrichtung (30) aktualisierbar sind und im spannungslosem Zustand des Gerätes und/oder der Komponente (10) erhalten bleiben.

9. Beschriftungs- und Anzeigeeinrichtung (30) nach einem der vorherigen Ansprüche, **dadurch gekennzeichnet, dass** die Beschriftungs- und Anzeigeeinrichtung (30) zur Anzeige eines modifizierbaren Barcodes ausgeführt ist.
